**Europäisches Patentamt**

**European Patent Office**

**Office européen des brevets**

(19)

(11) Veröffentlichungsnummer: **0 244 724 A2**

(12)
# EUROPÄISCHE PATENTANMELDUNG

(21) Anmeldenummer: **87106069.5**

(51) Int. Cl.⁴: **E 04 F 17/02**

(22) Anmeldetag: **25.04.87**

(30) Priorität: **30.04.86 DE 3614658**

(43) Veröffentlichungstag der Anmeldung: **11.11.87**
**Patentblatt 87/46**

(84) Benannte Vertragsstaaten: **AT BE CH DE ES FR GB GR IT LI LU NL SE**

(71) Anmelder: **Jacob Plein-Wagner Söhne**
**Steinzeugwarenfabrik KG, D-5522 Speicher (DE)**

(72) Erfinder: **Plein, Hans Rudolf, Dipl.-Kauf.,**
**Kapellenstrasse 29, D-5522 Speicher (DE)**
Erfinder: **Schröder, Peter, Betriebswirt,**
**Jacob-Plein-Wagner-Strasse 12, D-5522 Speicher (DE)**
Erfinder: **Sonermann, Franz-Josef, Ing.,**
**Dreisfeldstrasse 1, D-5531 Oberehe-Stroheich (DE)**

(74) Vertreter: **Schönherr, Wolfgang et al, Patentanwälte**
**Wolfgang Schönherr Dipl.-Ing. Karl-Heinz Serwe**
**Hawstrasse 28, D-5500 Trier (DE)**

(54) **Im unteren Abschnitt eines Schornsteines einsetzbarer Kondensatsammler.**

(57) Ein im unteren Abschnitt eines Schornsteines einsetzbarer Kondensatsammler (1) besteht aus einem Schornsteininnenrohrelement (2) aus Schamotte, Beton o.dgl. mit einem an die Innenwandungen (3) anschließenden Boden (4) und mit einem in einer der Innenwandungen oberhalb des Bodens angeordneten Abflußkanal (5) für das Kondensat, wobei der Boden zum Abflußkanal hin schräg nach unten geneigt verläuft. Um das auftretenden Kondensat vollständig aufzusammeln und durch den Abflußkanal aus dem Schornstein abzuführen, wird vorgeschlagen, an der Außenseite des Kondensatsammlers eine umlaufende Abflußrinne (9) vorzusehen, die durch einen Durchflußkanal (10) mit dem Abflußkanal (9) verbunden ist.

EP 0 244 724 A2

0244724

Beschreibung:

Anmelder:     Jacob Plein-Wagner Söhne
              Steinzeugwarenfabrik KG
              D-5522 Speicher

Bezeichnung:  Im unteren Abschnitt eines
              Schornsteines einsetzbarer
              Kondensatsammler

Die Erfindung betrifft einen im unteren Abschnitt
eines Schornsteines einsetzbaren Kondensatsammler,
bestehend aus einem Schornsteininnenrohrelement
aus Schamotte, Beton o.dgl. mit einem an die
Innenwandungen anschließenden Boden und mit
einem in einer der Innenwandungen oberhalb
des Bodens angeordneten Abflußkanal für das
Kondensat, wobei der Boden zum Abflußkanal hin
schräg nach unten geneigt verläuft.

Bei Schornsteinen, die zur Abführung von Abgasen
mit niedrigen Abgastemperaturen dienen, kommt
es oft zur Taupunktunterschreitung der Abgase.
Infolge der Taupunktunterschreitung bildet sich
Kondensat im, und unter Umständen auch an der
Außenwand des Schornsteininnenrohrelementes,
wobei das Kondensat nach unten zum Schornsteinfuß
abläuft.

Da dieses Kondensat, vermengt mit Ruß-,
Schwefelrückständen o.dgl. mehr sehr aggressiv
ist, treten oftmals Beschädigungen des
Schornsteines auf.

Darüber hinaus kann es infolge der häufigen Temperaturwechsel auch zur Bildung von Rissen in den Mörtelfugen kommen, so daß u.a. auch Kondensat nach außen tritt. Insbesondere kann dieses Austreten des Kondensates auftreten, wenn die Mörtelfugen beim Aufbau des Schornsteines nicht ordnungsgemäß ausgeführt wurden.

Die Aufgabe der Erfindung besteht daher darin, einen Kondensatsammler der eingangs genannten Art vorzugschlagen, der das auftretende Kondensat vollständig aufsammelt und durch den Abflußkanal aus dem Schornstein abführt.

Diese Aufgabe wird dadurch gelöst, daß der Kondensatsammler an seiner Außenseite von einer umlaufenden Abflußrinne umgeben ist, die durch einen Durchflußkanal mit dem Abflußkanal verbunden ist.

Vorteilhaft verläuft die Abflußrinne zum Durchflußkanal hin schräg nach unten geneigt.

Vorzugsweise ist die Abflußrinne von einem umlaufenden Kragen umgeben. Vorzugsweise ist der Querschnitt der Abflußrinne etwa V-förmig ausgebildet, wobei die innere Wand der Rinne etwa parallel und im Abstand zu den Innenwandungen des Kondensatsammlers verläuft und wobei die andere Wand der Abflußrinne schräg geneigt nach oben zum oberen Rand des Kragens verläuft. Vorteilhaft hat die äußere Wand des umlaufenden Kragens eine etwas größere Höhe als die innere Wand.

Vorteilhaft ist in der Abflußrinne im
Bereich oberhalb des Abflußkanals eine die
Abflußrinne nahezu ausfüllende Stütze angeordnet
und ist beiderseits der Stütze jeweils ein
Durchflußkanal zu dem Abflußkanal angeordnet.

Bei einer bevorzugten Ausführungsform weist die
Abflußrinne mit dem umlaufenden Kragen eine Breite
auf, die etwas kleiner als der Zwischenraum
zwischen der Außenwandung des
Schornsteininnenrohrelementes und der
Innenwandung eines Schornsteinaußenmantelelementes
ist.

Kondensatsammler, Abflußrinne und Kragen sind
vorteilhaft einstückig ausgebildet. Der Boden,
die Innenwandung, die Abflußrinne, der
Abflußkanal und/oder der Durchflußkanal sind
vorzugsweise keramisch glasiert ausgebildet.

In der Unterseite des Kondensatsammlers sind
bei einer vorteilhaften Ausführungsform im
Abstand zueinander verlaufende Schlitze, Nuten
o.dgl. angeordnet. Die Schlitze, Nuten o.dgl.
weisen vorzugsweise unterschiedliche Tiefe
auf. Vorteilhaft haben die Schlitze, Nuten o.dgl.
im Bereich des Abflußkanals eine geringe
Tiefe und vergrößert sich die Tiefe zur
gegenüberliegenden Seite hin.

Bei einer weiteren vorteilhaften Ausführungsform
ist auf dem Boden ein Prallschutz o.dgl.
angeordnet. Der Prallschutz besteht vorzugsweise
aus einer Schüttung von Blähtonkügelchen,

4 0244724

Kieseln, Tonkugeln o.dgl. Vorzugsweise
ist auf dem Prallschutz eine keramische Platte
mit Durchtrittsöffnungen angeordnet.

Bei einer weiteren vorteilhaften Ausführungsform
sind auf dem Boden Steine aus Schamotte,
Ton o.dgl. angeordnet, die Durchtrittsöffnungen
haben.

Vorzugsweise ist der Abflußkanal für das
Kondensat mit einer Rohrleitung verbindbar.

Die Erfindung ist in den Zeichnungen beispielhaft
dargestellt. Es zeigen:

Fig. 1 den Kondensatsammler in perspektivischer
        Draufsicht,

Fig. 2 den Kondensatsammler in eingebautem
        Zustand im Schornsteinfuß im Schnitt,

Fig. 3 den Kondensatsammler nach Fig. 2 mit
        Prallschutz im Schnitt und

Fig. 4 den Kondensatsammler nach Fig. 2 mit
        einem anderen Prallschutz im Schnitt.

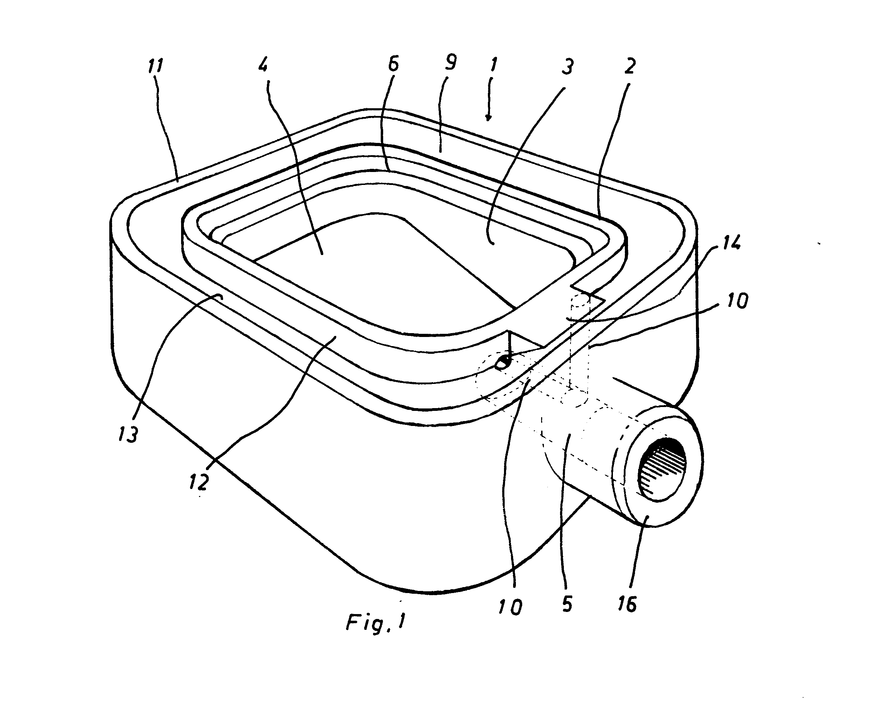

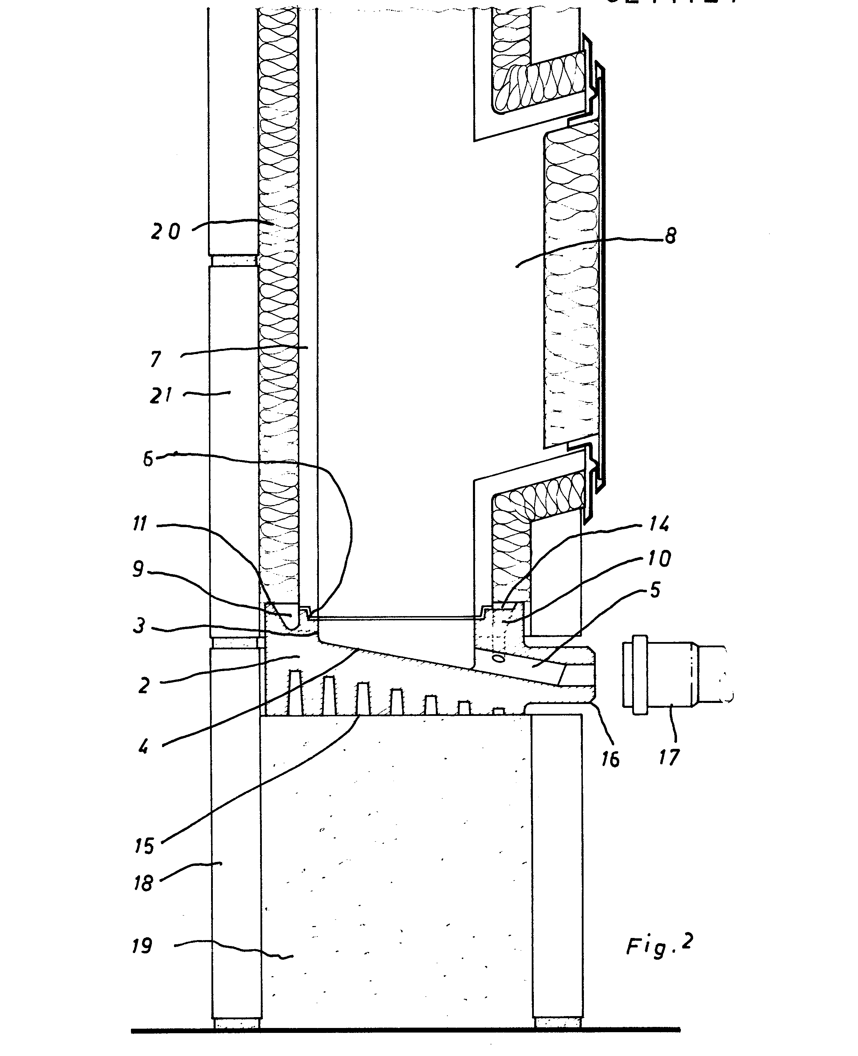

Nach den Fig. 1 und 2 besteht ein
Kondensatsammler (1) aus einem
Schornsteininnenrohrelement (2) mit einem
an die Innenwandung (3) anschließenden Boden (4)
und mit einem in einer Innenwandung (3)
oberhalb des Bodens (4) angeordneten
Abflußkanal (5) für das Kondensat.

Wie die Fig. 1 und 2 ferner erkennen lassen,
hat das Schornsteininnenrohrelement an seinem
oberen Rand eine Nut-Federverbindung (6) zum
Aufsetzen eines weiteren
Schornsteininnenrohrelementes (7) (Fig. 2), das
eine Reinigungsöffnung (8) aufweist.

Der Kondensatsammler (1) ist an seiner
Außenseite von einer umlaufenden Abflußrinne (9)
umgeben, die durch Durchflußkanäle (10)
mit dem Abflußkanal (5) verbunden ist.

Die Abflußrinne (9) verläuft zu den
Durchflußkanälen (10) hin schräg geneigt
nach unten und ist von einem umlaufenden
Kragen (11) umgeben, dessen äußerer Rand eine
etwas größere Höhe wie der innere Rand hat.
Der Querschnitt der Abflußrinne (9) ist etwa
V-förmig ausgebildet, wobei die innere
Wand (12) der Abflußrinne (Fig. 1) etwa
parallel und im Abstand zu den Innenwandungen (3)
des Kondensatsammlers (1) verläuft und
wobei die andere Wand (13) der Abflußrinne
schräg geneigt nach oben zum oberen Rand
des Kragens (11) hin verläuft.

Wie die Fig. 1 und 2 ferner zeigen, sind in der
Abflußrinne (9) im Bereich oberhalb des
Abflußkanals (5) eine die Abflußrinne
nahezu ausfüllende Stütze (14) und jeweils
beiderseits der Stütze ein Durchtrittskanal (10)
zum Abflußkanal (5) angeordnet.

Nach Fig. 2 sind in der Unterseite des
Kondensatsammlers (1) im Abstand zueinander
verlaufende Schlitze (15) angeordnet,
die unterschiedliche Tiefe aufweisen, wobei
die Schlitze im Bereich des Abflußkanals (5)
eine geringe Tiefe haben und sich ihre Tiefe
zur gegenüberliegenden Seite hin vergrößert.
Weiterhin mündet der Abflußkanal in einem
Anschlußstutzen (16), der mit einer
Rohrleitung (17) verbindbar ist.

Wie insbesondere die Fig. 2 bis 4 zeigen, wird
der Kondensatsammler (1) in ein
Schornsteinaußenrohrelement (18) eingesetzt,
dessen Innenraum (19) mit Beton o.dgl.
ausgefüllt ist.

Wie die Fig. 2 bis 4 ferner zeigen, wird nunmehr
auf den Kondensatsammler (1) ein
Schornsteininnenrohrelement (7) aufgesetzt,
das von einer Wärmedämmschicht (20) umgeben
ist. Die Wärmedämmschicht (20) wird außen
umgeben von einem Schornsteinaußenelement (21).

Wie die Fig. 2 bis 4 zeigen, hat die Abflußrinne (9)
mit den umlaufenden Kragen (11) eine Breite, die
etwas kleiner als der Zwischenraum zwischen
der Außenwandung des Schornsteininnenrohrelementes (7)
und der Innenwandung eines
Schornsteinaußenmantelelementes (21) ist, also
eine Breite, die etwas kleiner als die Dicke der
Wärmedämmschicht (20) ist.

Dadurch dient der Kondensatsammler (1) als
Zentrierung für den Schornsteinaußenmantel (21).

Der Kragen (11) und die Stütze (14)
verhindern dabei, daß die Wärmedämmschicht (20)
in die Abflußrinne (9) gelangt und diese
verstopft.

Das im Innern des Schornsteins anfallende
Kondensat wird über den Boden (4) zum
Abflußkanal (5) geführt und über den
Anschlußstutzen (16) durch die Rohrleitung (17)
abgeführt. Das an der Außenwandung des
Schornsteininnenrohrelementes (7) evtl.
auftretende Kondensat wird von der
Abflußrinne (9) aufgenommen und durch
die Durchtrittskanäle (10) gleichfalls zum
Abflußkanal (5) geführt und so nach außen
abgeführt.

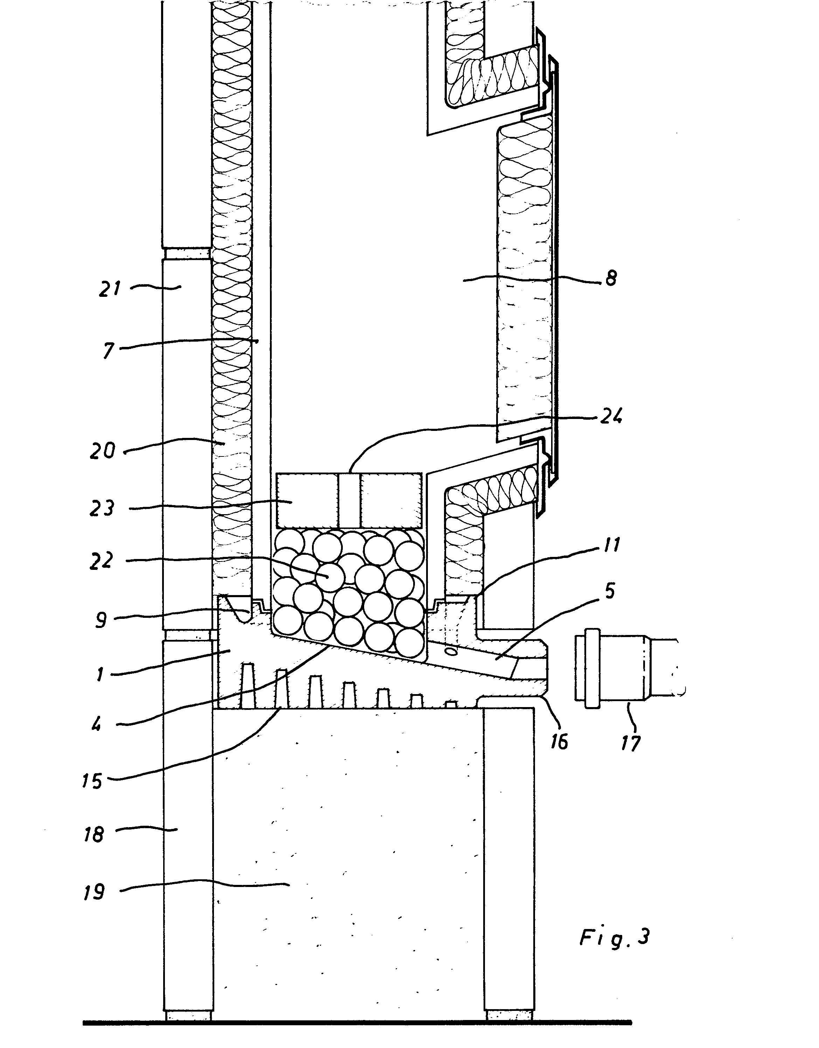

Nach Fig. 3 ist auf dem Boden (4) des
Kondensatsammlers eine Schüttung aus Kugeln (22)
angeordnet, die von einer keramischen Platte (23)
abgedeckt ist, wobei die Platte (23) mindestens
eine nach unten zum Boden führende
Durchtrittsöffnung (24) aufweist.

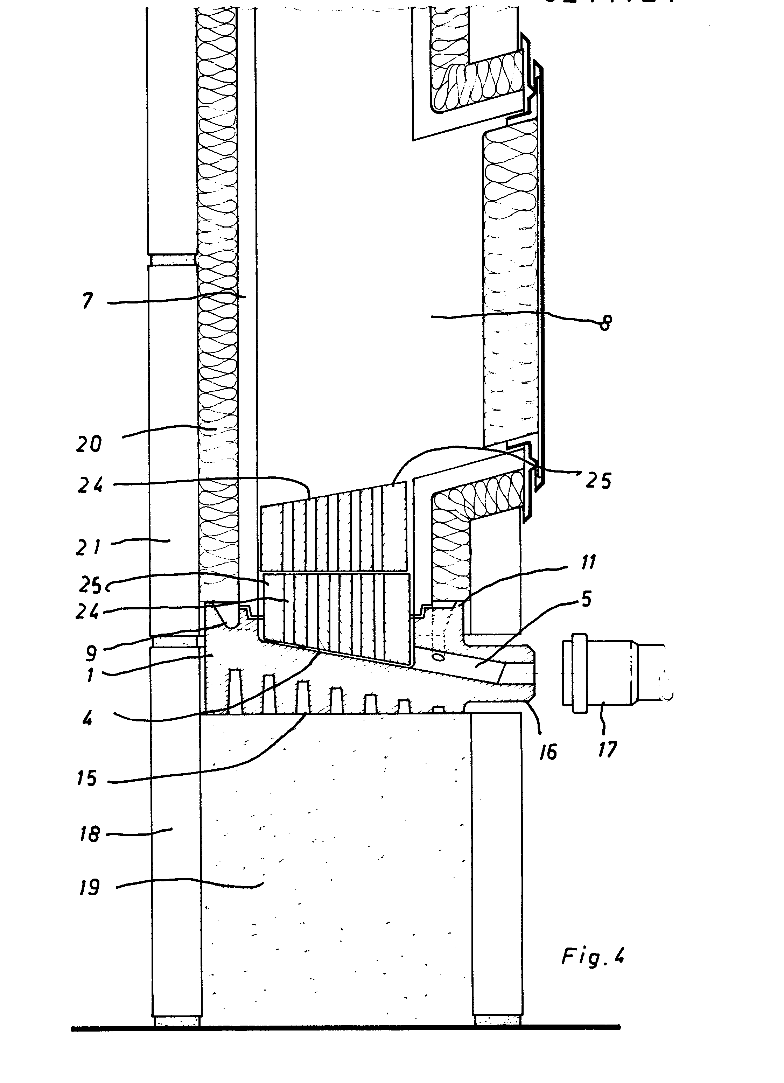

Nach Fig. 4 sind auf dem Boden (4) des
Kondensatsammlers (1) Steine (25) angeordnet,
die gleichfalls Durchtrittsöffnungen (24)
aufweisen, die vom Rohrinnern zum Boden (4)
führen.

Die als Prallschutz dienende Kugelschüttung (22)
bzw. die Steine (25) verhindern einmal, daß
sich ein Rußsack bildet, so daß der anfallende
Ruß durch die Reinigungsöffnung (8) leicht entfernt
werden kann. Weiterhin wirken sie als Dämpfung

8

für die herabfallende Kugel eines
Schornsteinreinigungsgerätes.

Die Schlitze (15) im Boden (4) des
Kondensatsammlers erhöhen die Elastizität
des Kondensatsammlers, so daß Beschädigungen
des Kondensatsammlers beim Trocknen bzw.
Brennen sowie durch die Kugel des Reinigungsgerätes
weitgehend ausgeschlossen sind.

9

0244724

Patentansprüche

1.    Im unteren Abschnitt eines Schornsteines einsetzbarer Kondensatsammler, bestehend aus einem Schornsteininnenrohrelement aus Schamotte, Beton o.dgl. mit einem an die Innenwandungen anschließenden Boden und mit einem in einer der Innenwandungen oberhalb des Bodens angeordneten Abflußkanal für das Kondensat, wobei der Boden zum Abflußkanal hin schräg nach unten geneigt verläuft, dadurch gekennzeichnet, daß der Kondensatsammler (1) an seiner Außenseite von einer umlaufenden Abflußrinne (9) umgeben ist, die durch einen Durchflußkanal (10) mit dem Abflußkanal (5) verbunden ist.

2.    Kondensatsammler nach Anspruch 1, dadurch gekennzeichnet, daß die Abflußrinne (9) zum Durchflußkanal (10) hin schräg nach unten geneigt verläuft.

3.    Kondensatsammler nach Anspruch 1 oder 2, dadurch gekennzeichnet, daß die Abflußrinne (9) von einem umlaufenden Kragen (11) umgeben ist.

4.    Kondensatsammler nach einem der Ansprüche 1 bis 3, dadurch gekennzeichnet, daß der Querschnitt der Abflußrinne (9) etwa V-förmig ausgebildet ist, wobei die innere Wand (12) der Abflußrinne etwa parallel und im Abstand zu den Innenwandungen (3) des Kondensatsammlers (1) verläuft und wobei die andere äußere Wand (13) der Abflußrinne schräg geneigt nach oben zum oberen Rand des Kragens (11) verläuft und die äußere Wand des Kragens eine etwas größere Höhe als die innere Wand hat.

5.    Kondensatsammler nach einem der Ansprüche 1 bis 4,
dadurch gekennzeichnet, daß in der Abflußrinne (9) im
Bereich oberhalb des Abflußkanals (5) eine die Abflußrinne
nahezu ausfüllende Stütze (14) angeordnet ist und daß
beiderseits der Stütze jeweils ein Durchflußkanal (10)
zu dem Abflußkanal (5) angeordnet ist.

6.    Kondensatsammler nach einem der Ansprüche 1 bis 5,
dadurch gekennzeichnet, daß die Abflußrinne (9) mit dem
umlaufenden Kragen (11) eine Breite aufweist, die etwas
kleiner als der Zwischenraum zwischen der Außenwandung
des Schornsteininnenrohrelementes (7) und der
Innenwandung eines Schornsteinaußenmantelelementes (21) ist.

7.    Kondensatsammler nach einem der Ansprüche 1 bis 6,
dadurch gekennzeichnet, daß Kondensatsammler (1),
Abflußrinne (9) und Kragen (11) einstückig ausgebildet sind
und daß der Boden (4), die Innenwandung (3), die
Abflußrinne (9), der Abflußkanal (5) und/oder der
Durchflußkanal (10) keramisch glasiert ausgebildet sind.

8.    Kondensatsammler nach einem der Ansprüche 1 bis 7,
dadurch gekennzeichnet, daß in der Unterseite des Bodens (4)
des Kondensatsammlers (1) im Abstand zueinander verlaufende
Schlitze (15), Nuten o.dgl. angeordnet sind, die
unterschiedliche Tiefe aufweisen, wobei die Schlitze,
Nuten o.dgl. im Bereich des Abflußkanals (5) eine geringe
Tiefe haben und sich die Tiefe zur gegenüberliegenden
Seite hin vergrößert.

9.    Kondensatsammler nach einem der Anprüche 1 bis 8, dadurch gekennzeichnet, daß auf dem Boden (4) ein Prallschutz o.dgl. aus einer Schüttung (22) von Blähtonkügelchen, Kieseln, Tonkugeln o.dgl. angeordnet ist und daß auf dem Prallschutz eine keramische Platte (23) mit Durchtrittsöffnungen (24) angeordnet ist.

10.    Kondensatsammler nach einem der Ansprüche 1 bis 9, dadurch gekennzeichnet, daß auf dem Boden (4) Steine (25) aus Schamotte, Ton o.dgl. angeordnet sind, die Durchtrittsöffnungen (24) haben.

Fig. 1

0244724

Fig.2

3/4

0244724

Fig. 3

4/4

0244724

Fig. 4